# EUROPEAN PATENT APPLICATION

(11) **EP 2 357 780 A2**
(43) Date of publication of application: **17.08.2011**
(21) Application number: 10197097.8
(22) Date of filing: 28.12.2010
(51) Int. Cl.: H04N 1/00, H04N 1/32

(54) **Image forming apparatus, information processing method, and recording medium storing information processing program**

(30) Priority: 05.01.2010 JP 2010000557; 18.11.2010 JP 2010257643
(71) Applicant: Ricoh Company Ltd., Tokyo 143-8555 (JP)
(72) Inventor: Hirai, Kohichi, Tokyo 143-8555 (JP)
(74) Representative: Schwabe - Sandmair - Marx

(57) **Abstract**

An image forming apparatus to which a program can be added includes a display control part to display a Web page and a memory part to store a character string indicating a script corresponding to the program. A judging part judges whether a script contained in the Web page corresponds to the program by using the memory part. A process execution part causes the program to process the script, which is judged to correspond to the program by the judging part.

## Description

### BACKGROUND OF THE INVENTION

### 1. Field of the Invention

The present invention relates to an image forming apparatus having a browser based application program interface (browser based API).

### 2. Description of the Related Art

There is known a multi-function peripheral (MFP), which is an image forming apparatus having multiple functions such as a printer function, a copy function, a scanner function, a facsimile function, etc. A severe restriction is applied to component parts of such an image forming apparatus in order to avoid an increase in a manufacturing cost. For example, one restriction prevents mounting a large capacity memory to an image forming apparatus because mounting a large capacity memory increases a manufacturing cost of the image forming apparatus.

In the meantime, similar to general purpose computers, many image forming apparatuses are equipped with a central processing unit (CPU) so that each function of an image forming apparatus is achieved according to a control performed by a program such as an application.

In some of those image forming apparatuses, an application program interface (API) is open to the public so that a user can mount a desired application to an image forming apparatus in order to customize functions of the image forming apparatus. Such an API open to public can be called by a program written in, for example, C language, Java (registered trademark) language, etc.

There also is an image forming apparatus mounted with browser software to display Hyper Text Markup Language (HTML) data, which is acquired from a network or the image forming apparatus, on a display panel of the image forming apparatus. In addition to the display function, such browser software may perform an equipment control by interpreting a script extended for equipment control, such as for example, Java (registered trademark) Script. According to such browser software, a browser based API such as a script can be provided for customization (for example, refer to Japanese Laid-Open Patent Application No. 2006-352845).

Japanese Laid-Open Patent Application No. 2006-352845 also discloses an equipment browser (referred to as "MFP browser") that is capable of performing a script, which can control equipments (MFP). Using the equipment browser, an application can be developed according to a description of a script. Thus, a development cost of an application can be reduced as compared to a development of an application using a conventional API such as Java (registered trademark).

On the other hand, there is an image forming apparatus in which an operation part and an equipment control part are separately constituted by hardware. In such a case, the operation part and the equipment control part can be operated independently or in cooperation with each other. The operation part has a user interface function in order to receive an input of a user through the equipment browser or display an input screen. The equipment control part performs a control of hardware such as a scanner, a plotter, etc. The independently provided operation part and equipment control part provide an advantage in that a modification of each of the operation part and the equipment control part can be done easily and dependency of operation of one of the operation part and the equipment control part on the other is lowered.

In the case where each of the operation part and the equipment control part is constituted by independent hardware, a cooperation of the operation part and the equipment control part can be achieved in a mode where the equipment control part performs a process corresponding to a script received by an equipment browser, which is operated on the hardware of the operation part. Accordingly, the operation part interprets the script, and a control command is sent to a script processing execution part of the equipment control part based on the interpretation of the script in order to achieve the browser based API for performing an equipment control.

The above-mentioned structure is achieved, for example, in a mode where the equipment browser of the operation part is stored in a flash memory and the script processing execution part of the equipment control part is stored in a hard disk.

However, the image forming apparatus, in which the script processing execution part is mounted in the equipment control part and the equipment browser is mounted in the operation part, has a problem in that, when extending the browser based API (script) in response to addition of a new function, an operation load for the extension is large. This is because the equipment browser must be changed to interpret the extended-API and also the script processing execution part of the equipment control part must be changed to be responsive to the control command according to the extended-API. Especially, if the equipment browser of the operation part is stored in a flash memory (a flash memory is usually used to store a program such as a browser), a load to rewrite the flash memory is larger than other types of memory.

### SUMMARY OF THE INVENTION

It is a general object of the present invention to provide an image forming apparatus, an information processing method, an information processing program and a recording medium storing the information processing program, in which the above-mentioned problems are eliminated.

A more specific object of the present invention is to provide an image forming apparatus, an information processing method, an information processing program and a recording medium storing the information processing program, which can reduce an operation load corresponding to a functionality expansion.

There is provided according to one aspect of the present invention an image forming apparatus to which a program can be added, comprising: a display control part configured to display a Web page; a memory part configured to store a character string indicating a script corresponding to the program; a judging part configured to judge whether a script contained in the Web page corresponds to the program by using the memory part; and a process execution part configured to cause the program to process the script, which is judged to correspond to the program by the judging part.

There is provided according to another aspect of the present invention an information processing method performed by an image forming apparatus to which a program can be added, the information processing method comprising: a display control step of displaying a Web page; a judging step of judging whether a script contained in the Web page corresponds to the program by using a memory part storing a character string indicating the script corresponding to the program; and a process execution step of causing the program to process the script, which is judged to correspond to the program in the judging step.

There is provided according to a further aspect of the present invention a computer readable recording medium storing an information processing program to cause an image forming apparatus, to which a program can be added, to perform an information processing method comprising: a display control step of displaying a Web page; a judging step of judging whether a script contained in the Web page corresponds to the program by using a memory part storing a character string indicating the script corresponding to the program; and a process execution step of causing the program to process the script, which is judged to correspond to the program in the judging step.

According to the above-mentioned invention, an operation load corresponding to an extension of function can be reduced.

Other objects, features and advantages of the present invention will become more apparent from the following detailed description when read in conjunction with the accompanying drawings.

### BRIEF DESCRIPTION OF THE DRAWINGS

FIG. 1 is a block diagram of an image processing system according to an embodiment of the present invention;
FIG. 2 is a block diagram of a hardware structure of a multi-function peripheral (MFP) according to an embodiment of the present invention;
FIG. 3 is a block diagram of a functional structure of the multi-function peripheral (MFP);
FIG. 4 is a flowchart of a script execution process in an equipment browser;
FIG. 5 is an illustration of keyword information;
FIG. 6 is a flowchart of a process of acquiring and registering the keyword information; and
FIG. 7 is a block diagram of the multi-function peripheral (MFP) and an external terminal having a display control part.

### DETAILED DESCRIPTION OF THE PREFERRED EMBODIMENTS

A description will be given below, with reference to the drawings, of embodiments of the present invention.

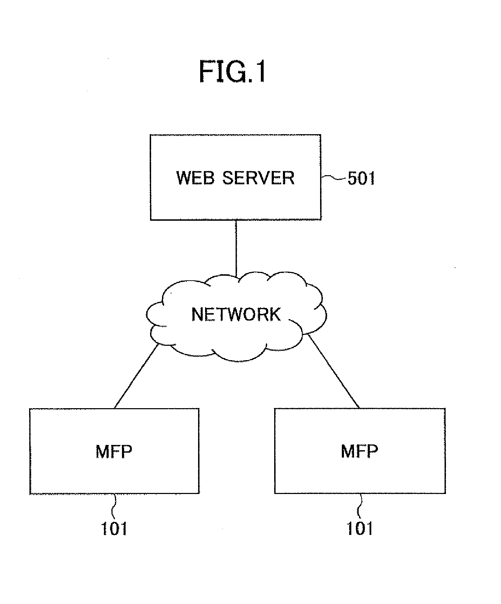

FIG. 1 is a block diagram of an image processing system according to an embodiment of the present invention. In the image processing system illustrated in FIG. 1, multi-function peripherals (MFPs) 101 and a Web server 501 are communicably connected with each other through a network (wired or wireless) such as a local area network (LAN), the Internet or the like.

The Web server 501 is a general purpose computer having a function as a Web server such as a HyperText Transfer Protocol daemon (HTTPd). The Web server 501 supplies a Web page such as HyperText Markup Language (HTML) data to the multi-function peripherals (MFPs) 101 in response to an HTTP request by Web browsers of the MFPs 101, which serve as clients. The Web page serves as an operation screen displayed on an operation panel or an application to cause the MFPs 101 to execute a predetermined process. A script contained in the Web page serves as an application. The Web server 501 may be a server having an accumulating and managing function of an image file created in the MFPs 101. In such a case, the Web server 501 may issue a print instruction according to HTML data to the MFPs 101 upon reception of a print request from a client apparatus (not illustrated in the figure) with respect to an image file to be managed.

Each MFP 101 is an image forming apparatus provided with combined functions. The combined functions means more than two functions including a copy function, a print function, a facsimile function, and a scan function. However, the present embodiment may be applied to an image forming apparatus having a single function.

The MFP 101 is capable of performing an operation in a mode of nonusing a network such as in a case where a copy process is performed in accordance with a user operation through an operation part, and is also capable of performing an operation in a mode of using a network. As an operation in a mode of using a network, there is an operation of the Web browser mounted in the MFP 101 based on a Web page received from the Web server 501. In the present embodiment, the Web browser mounted in the MFP 101 has not only a function to display a Web page but also a function to intermediate a process request designated by a script contained in the Web page to a control part of the equipment. That is, the MFP 101 has a browser based API as an API for equipment control. Hereinafter, the Web browser providing such an API is referred to as "equipment browser".

The Web page displayed or processed by the equipment browser may be saved in the MFP 101. The image processing system may be constituted using, instead of the Web server 501, a multi-function peripheral having a Web server function equivalent to the Web server 501.

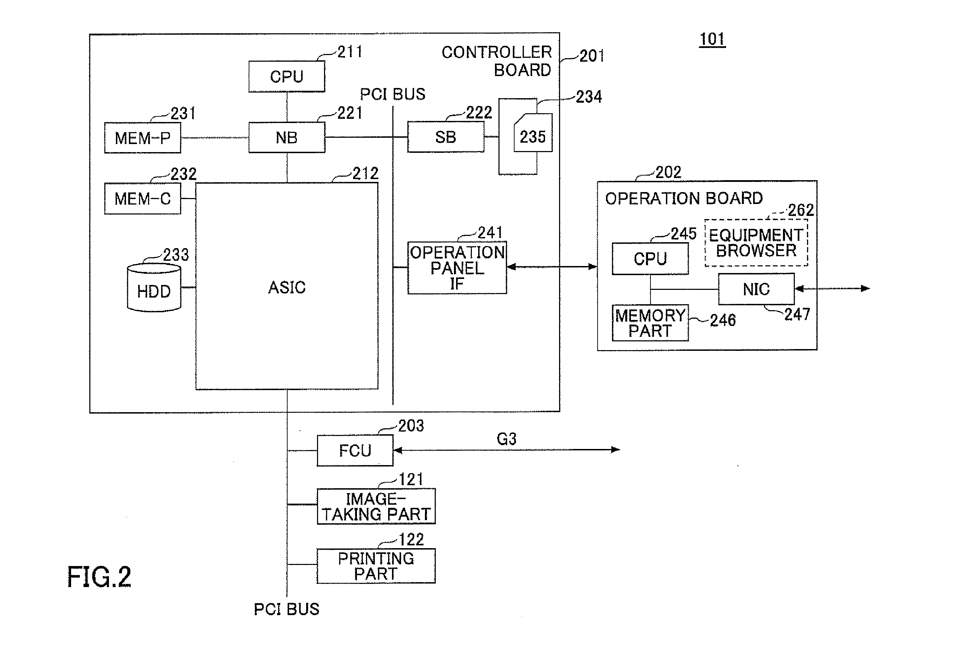

FIG. 2 is a block diagram of the MFP 101 according to the present embodiment.

In FIG. 2, the MFP 101 includes, as structural elements, a controller board 201 in which an equipment control part for controlling the entire MFP 101 is mounted, a facsimile control unit (FCU) 203 connected to the equipment control part on the controller board 201 through a PCI bus, an image-taking part 121, a printing part 122, and an operation board 202 connected through an operation panel interface (IF) 241 connected to the PCI bus. As mentioned later, in the MFP 101, a display control part on the operation board 202 is capable of performing a control operation independently. Thus, hereinafter, the equipment control part, which controls the entire MFP 101 including an operation of the combined functions, is referred to as "operation control part" in order to distinguish from a display control part of the operation board 202.

The operation control part on the controller board 201 includes a central processing unit (CPU) 211, an application specific integrated circuit (ASIC) 212, a north bridge (NB) 221, a south bridge (SB) 222, a memory (MEM-P) 231, a memory (MEM-C) 232, a hard disk drive (HDD) 233, an IC (memory) card slot 234, and an operation panel interface (IF) 241.

The CPU 211 is an IC for various information processings. The ASIC 212 is an IC for various image processings. The MEM-P 231 is a system memory of the MFP 101. The MEM-C 232 is a local memory of the MFP 101. The HDD 233 is a storage of the MFP 101. The IC (memory) card slot 234 is a slot for setting a removable IC (memory) card 235.

By using MEM-C 232 (usually, a RAM is used) as a work memory, the CPU 211 performs processing based on the software (program) stored in the MEM-P 231 (usually, a flash memory is used) and the HDD 233 in order to have a computer constituted by those elements to function as the operation control part.

Reading and writing of data in the MEM-C 232 and the HDD 233 can be performed through the IC (memory) card slot 234 or a network interface controller (NIC) 247 mentioned later. When adding a program (application) or up-grading a version of a program (application), the program is written in the MEM-C 232 or the HDD 233 by an installation process being performed with respect to program data stored in the IC (memory) card 235 or program data received through the network.

As apparent from FIG. 2, the control part (display control part) of the operation board 202 (operation part) is independent of the operation control part on the controller board 201. That is, the CPU 245 and the memory part 246, which together constitute an independent control part (computer), are mounted on the operation board 202 so that an independent control operation can be performed. Of course, the operation part functions as a user interface of the MFP 101 in order to perform a process of intermediating a process request, which a user performs through an input operation, to the operation control part, which controls a scanner, a plotter and the like. Accordingly, in such a case, cooperation between the operation control part and the operation part on the controller board 201 is needed.

As mentioned above, the operation part according to the present embodiment includes hardware constituting a control part (display control part) containing the CPU 245 and the memory part 246 on the operation board 202 in order to perform a cooperating operation with the operation control part and a process in the operating part independently. The apparatus browser 262 is mounted in the control part of the operation part.

That is, in the CPU 245 and the memory part 246, which are provided as hardware constituting the control part, the display control part is achieved by operating the software (program) that realizes a function as a user interface such as the equipment browser 262.

The display control part performs processing to acquire information (Web page, etc.) provided by an external equipment such as the Web server 501 through the equipment browser 262. For example, the display control part acquires structure information (Web page) of a display screen to be displayed on a display part of a liquid crystal panel on the operation board 202 from the Web server 501, and constructs operation buttons and the like to be displayed on the screen based on the acquired structure information (as for the processing of the equipment browser 262 to acquire the structure information of the display screen of the liquid crystal panel, refer to an operation of an MFP browser disclosed in Japanese Laid-Open Patent Application No. 2006-352845).

Moreover, the display control part is also capable of realizing a simple calculation function or a schedule setting function for a facsimile transmission function to request processing according to a schedule based on a script contained in the Web page processed by the equipment browser 262.

A description will be given below of a structure relating to the equipment browser 262.

Basically, the apparatus browser 262, which is mounted in the display control part on the operation board 202 independent of the operation control part on the controller board 201, acquires and displays a Web page designated in the process request from an external equipment such as the Web server 501 or the MFP itself. Additionally, the equipment browser 262 interprets a script contained in the Web page, and sends a process request to the operation control part in accordance with a result of interpretation. The script is classified into a script to be processed or processable by the display control part and a script to be processed or processable by the operation control part. As for the script determined to be processed by the operation control part, an execution instruction of the script concerned is sent to the operation control part.

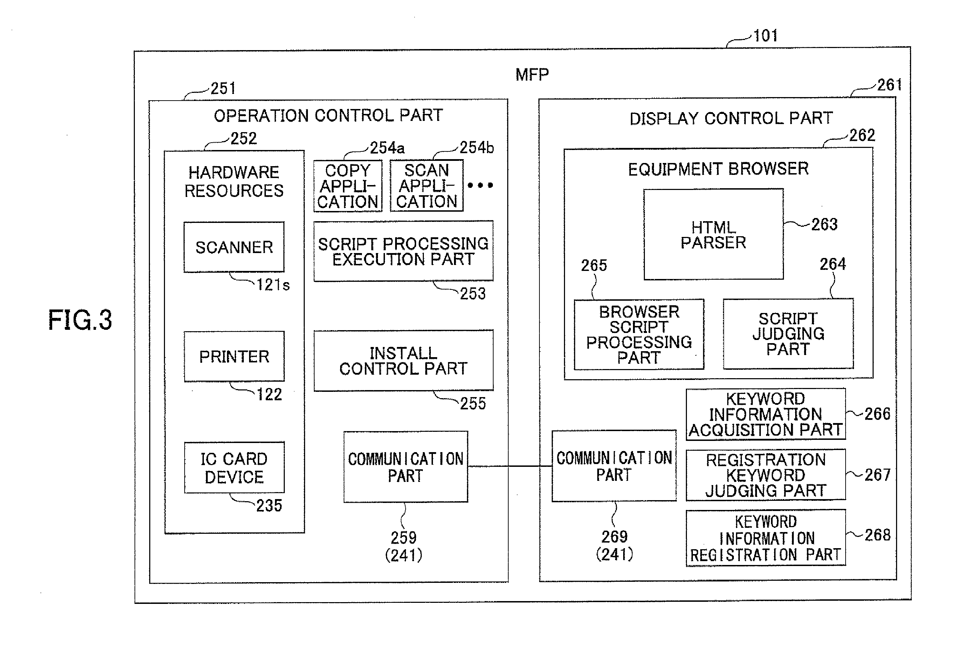

FIG. 3 is a block diagram of the MFP 101 according to the present embodiment. In the MFP 101, each of the display control part 261 and the operation control part 251 can operate independently. Accordingly, as illustrated in FIG. 3, the functional block is also separated into the operation control part 251 and the display control part 261. A cooperation operation between the operation control part 251 and the display control part 261 is realized by exchanging information between a communication part 259 of the operation control part 251 and a communication part 269 of the display control part 261.

The display control part 261 includes the equipment browser 262. The equipment browser 262 includes processing parts such as an HTML parser 263, a script judging part 264, a script processing execution part 265, etc.

The HTML parser 263 interprets the structure information of the display screen according to HTML in the Web page to be processed, and performs screen drawing based on a result of interpretation.

The script judging part 264 interprets a script contained in the Web page. The script judging part 264 judges whether the script contained in the Web page is a script to be processed by the operation control part 251 or a script which can be processed in the display control part 261 (the equipment browser 262) (for example, Java (registered trademark) previously incorporated in the equipment browser 262). The script which the equipment browser 262 can process is processed by the script processing execution part 265. That is, the script processing execution part 265 is a mount of an object corresponding to a script (for example, Java (registered trademark) script), which can be processed in the equipment browser 262.

In the present embodiment, the judgment by the script judging part 264 is made based on keyword information. The keyword information means information containing a character string (keyword) group for discriminating a method name or a parameter name (variable name) of a script or the like, which is to be processed by the operation control part 251. As mentioned later, the script to be processed by the operation control part 251 corresponds to an application to be installed in the operation control part 251. Therefore, it is said that the script to be processed by the operation control part 251 corresponds to the application to be installed in the operation control part 251.

In the present embodiment, data including the keyword information is kept accessibly by the display control part 261 together with a program (application) for performing a process according to a method name contained in the keyword information.

For example, an install package file of an application, which is installed in the MFP 101 encloses the keyword information indicating a method name provided to the application. When mounting (installing) an application to the operation control part 251, the keyword information enclosed in the installation package file is installed in the operation control part 251 together with the application in an accessible form. Therefore, an amount of keyword information increases in accordance with installation of applications. In the operation control part 251, a plurality of pieces of keyword information may be kept in separate files, respectively, or may be integrated into and kept in a single file. Then, the display control part 261 acquires the keyword information kept in the operation control part 251 at an appropriate time, and registers (records) the acquired keyword information into the memory part 246 so that the script judging part 264 can use the keyword information. The data containing the keyword information may be managed in an integrated fashion in the Web server 501, which provides a program (application). In such a case, the keyword information may be acquired from the Web server 501.

As a means necessary for registration processing of the keyword information, the display control part 261 includes a keyword information acquisition part 266, a registration keyword judging part 267, and a keyword information registration part 268. Each of these parts is realized by processing, which the program installed in the display control part 261 (for example, recorded in the memory part 246) causes the CPU 245 to execute. These parts may be contained in the equipment browser 262. That is, these parts may be realized by processing, which the equipment browser 262 causes the CPU 245 to execute.

The keyword information acquisition part 266 acquires the keyword information from the operation control part 251. The registration keyword judging part 267 judges the keyword information to be registered in the acquired keyword information. The keyword information registration part 268 registers (records) into the memory part 246 the keyword information judged to be registered.

The operation control part 251 has processing parts including a communication part 259 and a script processing execution part 253, etc. The communication part 259 transmits keyword information to the display control part 262, or receives from the display control part 261 an execution instruction of processing according to a script. The communication parts 259 and 269 perform data communication in the same manner as the communication method performed through the network as illustrated in FIG. 1.

The script processing execution part 253 operates the application corresponding to the method name designated in a processing execution instruction of the script received by the communication part 259.

For example, if the method name specified in the processing execution instruction of the script corresponds to a copy application 254a, the script processing execution part 253 drives (calls) the copy application 254a- The copy application 254a performs copy processing by controlling hardware resources 252 including a scanner 121s, a printer 122, etc.

Although FIG. 3 illustrates the copy application 254a and a scan application 254b as an example of an application, there are other applications realizing other functions such as a printer application, a FAX application, etc. Additionally, an addition of an application and upgrade of a version of an application can be made according to program data stored in the IC (memory) card 235. For example, in FIG. 3, the install control part 255 exists as an application to perform an addition, upgrade, etc., of an application. When the method name specified in the processing execution instruction of a script corresponds to the installation control part 255, the script processing execution part 253 causes the installation control part 255 to operate. The installation control part 255 performs an addition and upgrade of a program by controlling operations of the hardware resources 252 such as the IC (memory) card 235, etc.

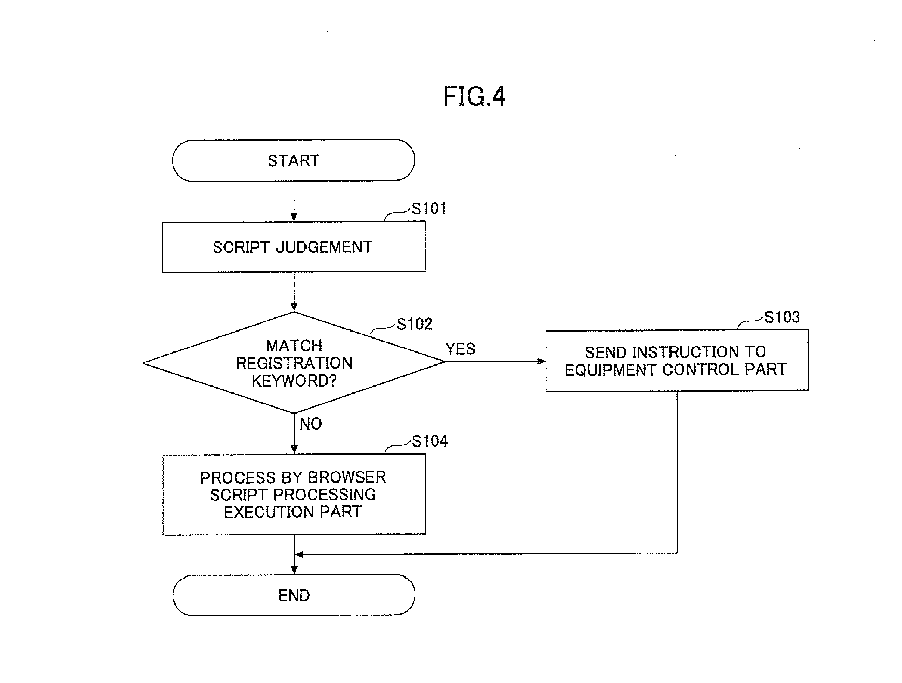

A description is given below of an execution process of a script performed by the equipment browser 262. FIG. 4 is a flowchart of a script execution process performed in the equipment browser 262. In FIG. 4, a state where a Web page containing a script is acquired by the Web server 501 and a display screen is displayed on the display part is set as an initial state.

When an instruction is input by a user through the display screen or the operation board 202, the equipment browser 262 starts processing of the script according to the input instruction. First, the script judging part 264 judges a description of the script according to the input instruction, and judges whether the operation control part 251 should perform processing on the description of the script concerned (step S101). That is, it is judged whether the script corresponds to the application installed in the operation control part 251. This judgment is made using the keyword information registered in the memory part 246 by the keyword information registration part 268.

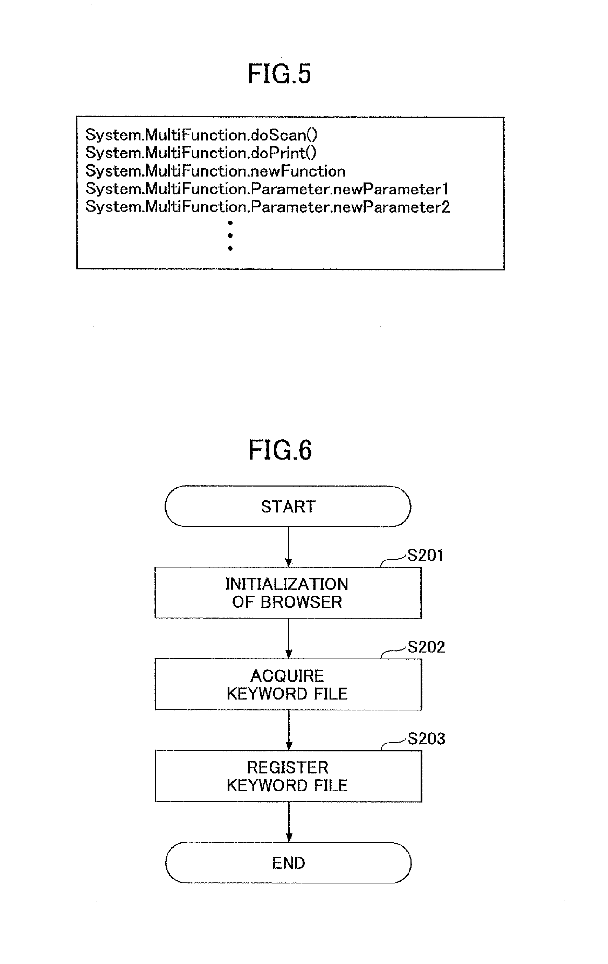

FIG. 5 is an illustration of an example of the keyword information. The keyword information is a list of character strings, each of which indicates a method name or an attribute name (parameter name) of the script to be processed by the operation control part 251. A normal expression may be used for the character string contained in the keyword information. For example, if all scripts that start from "System" is to be processed by the operation control part 251, the character strings "System*" may be contained in the keyword information.

The script judging part 246 judges, in step S101, whether a character string matching the script corresponding to the input instruction is contained in the keyword. Here, the matching is not limited to a complete matching as character strings. That is, the description of the script is a description indicating call of a method, substitution of a value for the attribute, acquisition of a value from the attribute, etc. Accordingly, for example, it is judged, in step S101, whether a character string contained in the keyword information is contained in the description of the script.

The process branches according to a result of judgment of step S101. That is, if the character string corresponding to a description of the script according to the input instruction is contained in the keyword information (YES of step S102), the script judging part 246 sends a process execution instruction of the script concerned to the operation control part 251 through the communication part 269 (step 103). The process execution instruction contains the description of the script according to the input instruction. The description is, for example, call of a method, substitution of a value for the attribute, acquisition of a value from the attribute, etc. The process execution instruction is sent to the script process execution part 253 through the communication part 259. The script process execution part 253 drives (calls) the application corresponding to the description (method name or attribute name) of the script designated in the process execution instruction. The correspondence between the script and the description may be determined by checking the keyword information managed in the operation control part 251 on an individual application basis with the description of the script concerned. That is, the application relating to the keyword information containing a keyword matching the description of the script concerned is the application that is called. In the operation control part 251, for example, when installing the application, the keyword information attached to the application concerned is saved in the HDD 233 or the like by being related to the application. As a result, the keyword information is managed on an individual application basis.

On the other hand, if the character string corresponding to a description of the script according to the input instruction is not contained in the keyword information (NO of step S102), the script process execution part 265 executes the process of the script concerned (step S104). That is, the script concerned is executed in the display control part 261 (equipment browser 262).

After performing the process of steps S103 and S104, the script process performed by the display control part 261 is ended.

If the keyword information registered in the memory part 246 is the keyword information kept in the operation control part 251 according to installation of an application, etc., there is a small possibility of mismatching between the result of judgment by the script judging 264 and the script executable by the operation control part 251. This is because the keyword information registered in the memory part 246 meets the installation condition of the application in the operation control part 251.

On the other hand, when the keyword information managed unitary in an external equipment such as the Web server 501 is acquired through the network and registered in the memory part 246, the script judged to be executable by the operation control part 251 by the script judging part 264 is not always executable by the operation control part 251. This is because there is a possibility that the application corresponding to the script concerned is not installed in the operation control part 251. Moreover, there is a possibility that the script concerned cannot be executed by the hardware resources provided in the MFP 101.

In such a case, the operation control part 251 sends a notification to the display control part 261 that the script process cannot be executed. In response to the notification, the display control part 261 displays through the display part of the operation board 202 a message of notifying that the process designated by the user was not able to be executed. The message may contain information regarding a reason such that, for example, there is no program (application) corresponding to the input instruction.

Alternatively, in a case where the reason that the script cannot be executed is that there is no corresponding application, the install control part 255 may automatically install the application concerned. After installing the application, the script process execution part 253 drives the installed application to execute the process according to the description of the script. Thus, although there is a possibility that a processing time of the script is increased by a time spent on installing the application, the process corresponding to the instruction of the user can be executed without giving the user notice of the mismatching between the keyword information in the memory part 246 and the installation condition of the application in the operation control part 251.

In such a case, the keyword information may describe address information (Uniform Resource Locator (URL) or an IP address) of a location where the application corresponding to the script concerned is downloaded. The install control part 255 may determine the location where the application to be installed is downloaded based on the address information. Alternatively, the location where the application is downloaded may be fixed (common to all scripts). In such a case, for example, the address information of the location where the application is downloaded is recorded in the HDD 233.

As mentioned above, the display control part 261 judges based on the keyword information whether a script is processable by the operation control part 251 or the equipment browser 262. Initially, the keyword information is kept in the operation control part 251 in accordance with the installation of the application. The display control part 261 acquires the keyword information from the operation control part 251 at an appropriate time, and registers the keyword information in the memory part 246.

In order for the script judging part 264 to make a proper judgment, it is desirable to use the keyword information, which meets the newest installation condition of the application in the operation control part 251. Because installation or upgrade of the application in the operation control part 251 is performed sequentially, the newest keyword information must be acquired by the display control part 262 at an appropriate timing.

For example, the keyword information may be acquired from the operation control part 251 each time an instruction input is performed by a user. However, in such a case, it is considered that a processing load corresponding to the input instruction increases, which results in an increase in the execution time of the processing corresponding to the input instruction. Thus, a time of execution of the acquisition process of the keyword information may be selected in consideration of a balance with the processing time required for the keyword information acquisition process. Specifically, the keyword information acquisition process may be performed at an appropriate time before the application is used by the operation control part 251, such as a time of initializing the display control part 261 or the equipment browser 262 or at a time of turning on the power of the MFP 101. Alternatively, the keyword information acquisition process may be performed periodically.

The keyword information may be acquired from the Web server 501, the server which manages the application, or other MFPs. By doing so, if a communication failure occurs in communication between the display control part 261 and the operation control part 251, the display control part 261 can acquire the keyword information from external equipment. In such a case, the locations from which the keyword information is acquired may be given a priority order.

The keyword information also serves as discrimination information used by the operation control part 251 to drive (call) each application. A correspondence relationship between each keyword contained in the keyword information and the application is determined at a time of developing the application. Accordingly, the keyword information of each application can be prepared together with a program constituting the application, and can be distributed by attaching to the application together with the program. For example, a file in which the keyword information is described is stored in an installation package of the application to distribute the keyword information. By doing so, the keyword information of the application can be mounted in the operation control part 251 simultaneously at the time of installing the application in the operation control part 251.

If the keyword information is stored in the installation package of each application, it is possible that uniformity of file formats of files in which the keyword information is described may be impaired. This is because the application may be developed by a plurality of vendors who do not have the same awareness regarding the file format of the keyword information. If the file format of the keyword information is not unified, the script execution process may be complicated or cannot be performed normally.

Thus, the display control part 261, which acquires the keyword information, may convert the file format of the acquired keyword information into a unified format and registers the keyword information with the unified file format. By unifying the file format of the keyword information, the keyword information can be managed easily and degradation in the performance of the process using the keyword information can be avoided.

A description is given below of a keyword information acquisition and registration process.

FIG. 6 is a flowchart of a keyword information acquisition and registration process. According to the process illustrated in FIG. 6, the keyword information is acquired in the process of initializing the equipment browser 262.

When the initializing process of the display control part 261 is started when a power is turned on or when returning from a sleep state (energy-saving state), the equipment browser 262 performs an initialization process necessary for receiving a process request made by a user's input operation through the operation board 202 (step S201).

In the initialization process, the keyword information acquisition part 266 acquires a file (keyword file) in which the keyword information is described from the operation control part 251 through the communication parts 259 and 269 (step S202). At this time the operation control part 251 has been activated by a similar initialization process.

Then, the keyword information registration part 268 stores (records) the acquired keyword file in the memory part 246 (step S203). The newest keyword information is included in the acquired keyword file. Therefore, the keyword information in the memory part 246 is updated in the newest state by performing the process of FIG. 6.

Consequently, it becomes possible for the script judging part 264 to make a proper judgment on the determination of the script to be executed by the operation control part 251. Although not illustrated in the flowchart of FIG. 6, if a keyword does not satisfy the registration condition, in the keyword information acquired from the operation control part 251, the registration keyword judging part 267 eliminates the keyword concerned from objects to be registered. The keyword which does not satisfy the registration condition is a keyword which does not satisfy the form (grammar) regarding a keyword.

After the process of step S203 is ended, the equipment browser 262 is in a state where the equipment browser 262 can perform a process corresponding to the instruction input by the user.

As mentioned above, according to the present embodiment, the keyword information for discriminating the script which can be processed by the operation control part 251 is installed in the operation control part 251 together with a program for extension or upgrade of the application. Then, the display control part 261 acquires the keyword information from the operation control part 251 and registers the keyword into the memory part 246. Then, the script according to the extension or upgrade of the application is judged based on the keyword information, and an execution instruction of the script concerned is sent to the operation control part 251.

Therefore, the necessity of performing the alteration according to extension or upgrade of the application with respect to the apparatus browser 262 can be reduced remarkably. Consequently, the operation load corresponding to the extension of function can be reduced.

Moreover, in the display control part 261, a memory other than a flash memory can be used as the device (memory part 246) which saves the keyword information. Accordingly, it becomes easy to rewrite the keyword information stored in the memory part 246.

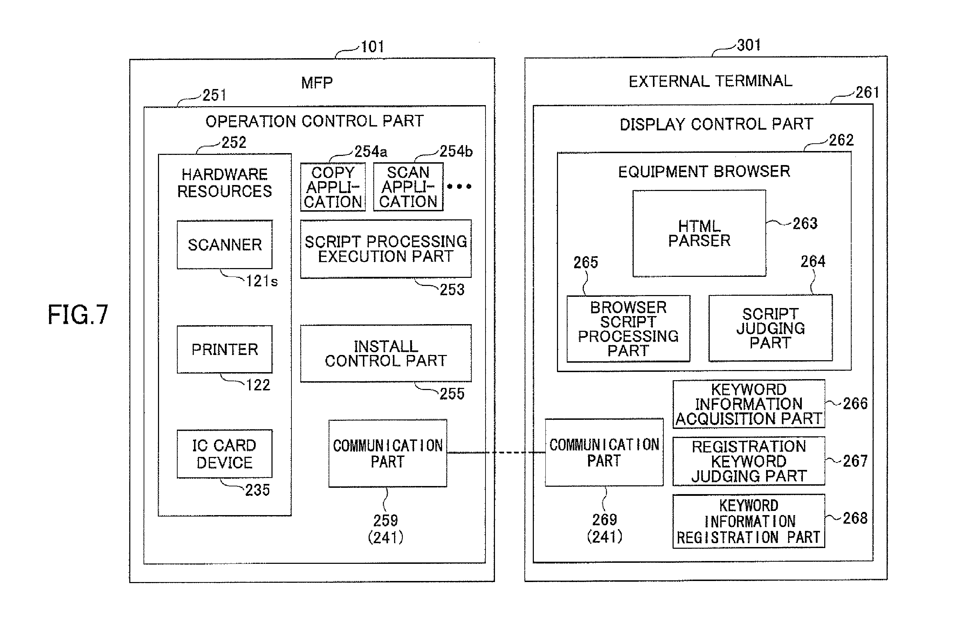

In the meantime, the display control part 261 may be mounted in an external terminal outside the MFP 101. FIG. 7 is a block diagram of the MFP 101 and an external terminal mounted with a display control part. In FIG. 7, parts that are the same as the parts illustrated in FIG. 3 are given the same reference numerals, and descriptions thereof will be omitted.

In FIG. 7, the external terminal 301 is a portable terminal such as, fro example, a cellular phone, a personal digital assistance (PDA), a smart phone, etc. According to the structure illustrated in FIG. 7, a Web page is downloaded from the Web server 501 to the external terminal 301. Thus, the MFP 101 can be controlled based on the script contained in the Web page displayed in the external terminal 301. For example, in the external terminal 301, if the description of the script, which is to be executed according to the instruction input to the display screen displayed based on the Web page, matches the keyword contained in the keyword information, the process according to the script concerned is performed in the MFP 101. In FIG. 7, the communication between the communication parts 259 and 269 can be performed by a wireless LAN, a short-distance radio communication, or the like.

It should be noted that display control part 261 of the MFP 101 is omitted in FIG. 7 for the sake of convenience of illustration.

## Claims

1. An image forming apparatus to which a program can be added, **characterized by**:
a display control part configured to display a Web page;
a memory part configured to store a character string indicating a script corresponding to said program;
a judging part configured to judge whether a script contained in said Web page corresponds to said program by using said memory part; and
a process execution part configured to cause said program to process the script, which is judged to correspond to said program by said judging part.

2. The image forming apparatus as claimed in claim 1, wherein said character string is installed in said image forming apparatus together with said program, and further comprising a registration part configured to register the installed character string in said memory part.

3. The image forming apparatus as claimed in claim 1 or 2, further comprising an install control part configured to acquire and install said program in said image forming apparatus when said program corresponding to the script, which is judged to correspond to said program by said judging part, does not exist in said image forming apparatus.

4. An information processing method performed by an image forming apparatus to which a program can be added, the information processing method **characterized by**:
a display control step of displaying a Web page;
a judging step of judging whether a script contained in said Web page corresponds to said program by using a memory part storing a character string indicating the script corresponding to said program; and
a process execution step of causing said program to process the script, which is judged to correspond to said program in said judging step.

5. The information processing method as claimed in claim 4, wherein said character string is installed in said image forming apparatus together with said program, and further comprising a registration step of registering the installed character string in said memory part.

6. The information processing method as claimed in claim 4 or 5, further comprises an install control step of acquiring and installing said program in said image forming apparatus when said program corresponding to the script, which is judged to correspond to said program by said judging step, does not exist in said image forming apparatus.

7. A computer readable recording medium storing an information processing program to cause an image forming apparatus, to which a program can be added, to perform an information processing method **characterized by**:
a display control step of displaying a Web page;
a judging step of judging whether a script contained in said Web page corresponds to said program by using a memory part storing a character string indicating the script corresponding to said program; and
a process execution step of causing said program to process the script, which is judged to correspond to said program in said judging step.

8. The computer readable recording medium as claimed in claim 7, wherein said character string is installed in said image forming apparatus together with said program, and said information processing method further comprising a registration step of registering the installed character string in said memory part.

9. The computer readable recording medium as claimed in claim 7 or 8, wherein said information processing method further comprises an install control step of acquiring and installing said program in said image forming apparatus when said program corresponding to the script, which is judged to correspond to said program by said judging step, does not exist in said image forming apparatus.
